# EUROPEAN PATENT APPLICATION

(11) **EP 4 386 923 A1**
(43) Date of publication of application: **19.06.2024**
(21) Application number: 21953497.1
(22) Date of filing: 12.08.2021
(51) Int. Cl.: H01M 10/0562, H01M 8/1246

(54) **PROTON CONDUCTOR AND METHOD FOR PRODUCING SAME**

(71) Applicant: Chiyoda Corporation, Kanagawa 220-8765 (JP); Kyoto University, Kyoto-shi, Kyoto 606-8501 (JP)
(72) Inventor: OKADA Yoshimi, Yokohama-shi, Kanagawa 220-8765 (JP); YASUNISHI Takuo, Yokohama-shi, Kanagawa 220-8765 (JP); IMAGAWA Kenichi, Yokohama-shi, Kanagawa 220-8765 (JP); EGUCHI Koichi, Kyoto-shi, Kyoto 606-8501 (JP); MATSUI Toshiaki, Kyoto-shi, Kyoto 606-8501 (JP); MUROYAMA Hiroki, Kyoto-shi, Kyoto 606-8501 (JP); OZEKI Takashi, Kyoto-shi, Kyoto 606-8501 (JP)
(74) Representative: Dehns
(86) International application number: PCT/JP2021/029746
(87) International publication number: WO 2023/017602

(57) **Abstract**

Provided is a proton conductor and a manufacturing method thereof that are suitable for the use in a temperature range between 200°C and 600°C.

[Solution] A proton conductor has electric conductivity of 0.01 S/cm or more at 300°C, wherein a portion of lithium ions of Li₁₄₋₂ₓZn₁₊ₓ(GeO₄)₄ is substituted with protons. The x is a number equal to or more than 0. 40% to 70% inclusive of movable lithium ions contained in Li₁₄₋₂ₓZn₁₊ₓ(GeO₄)₄ may be substituted with the protons. 50% to 60% inclusive of movable lithium ions contained in Li₁₄₋₂ₓZn₁₊ₓ(GeO₄)₄ may be substituted with the protons. A manufacturing method of a proton conductor comprises a process of substituting a portion of lithium ions with protons by immersing Li₁₄₋₂ₓZn₁₊ₓ(GeO₄)₄ in a non-aqueous organic solvent containing acid.

## Description

### TECHNICAL FIELD

The present invention relates to a proton conductor, and more particularly, to a proton conductor having sufficient proton electric conductivity in a medium temperature range of 200°C or higher, more preferably, between 300°C and 600°C.

### BACKGROUND ART

A polymer electrolyte fuel cell (PEFC) used for automobiles, a phosphoric acid fuel cell (PAFC) used as a stationary fuel cell, a molten carbonate fuel cell (MCFC), and a solid oxide fuel cell (SOFC) have been put to practical use. An operation temperature of the polymer electrolyte fuel cell is between normal temperature and 100°C, an operation temperature of the phosphoric acid fuel cell is between 180°C and 200°C, an operation temperature of the molten carbonate fuel cell is between 600°C and 700°C, and an operation temperature of the solid oxide fuel cell is between 600°C and 900°C. However, there is no fuel cell that operates in a medium temperature range between 200°C and 600°C.

The fuel cell that operates in the medium temperature range between 200°C and 600°C is suitable not only for a hydrogen-oxygen fuel cell but also for a direct type fuel cell that generates hydrogen from various fuels in a fuel electrode room of the fuel cell, and generates electricity by a fuel cell reaction using the generated hydrogen. Further, the fuel cell that operates in the medium temperature range between 200°C and 600°C can promote the fuel cell reaction as compared with a fuel cell that operates in a low temperature range of 200°C or less, thereby improving efficiency.

There is no fuel cell that operates in the medium temperature range between 200°C and 600°C because there is no ionic conductor having sufficient ionic electric conductivity in this temperature range. So far, cesium dihydrogen phosphate (CsH₂PO₄), which was discovered in 1997, has attracted attention as the highest proton conductor. However, the cesium dihydrogen phosphate undergoes a phase transition at 270°C or higher, so that the use limit temperature of the cesium dihydrogen phosphate is set to 270°C. The cesium dihydrogen phosphate usually has an operation temperature of 250°C, and an electric conductivity σ (S/cm) at this temperature is about 0.008. Accordingly, realization of a fuel cell that operates in the medium temperature range has been an important research topic since the 1990s.

Patent Document 1 discloses a direct type fuel cell. The direct type fuel cell supplies its cells with an organic hydride such as methylcyclohexane and decalin as fuel, and causes a dehydrogenation reaction by causing the organic hydride compound to come in contact with a noble metal catalyst fixed to an electrode of a fuel electrode. The hydrogen generated at the fuel electrode delivers an electron to the fuel electrode and thus becomes a proton. The proton moves in an electrolyte membrane, and receives the electron from an electrode together with an oxygen atom activated at a counter air electrode to promote a fuel cell reaction. The electrolyte membrane is a membrane made of a mixture of a microcrystal of cesium dihydrogen phosphate (CsH₂PO₄) and polytetrafluoroethylene. The direct type fuel cell of Patent Document 1 has an output of 40 mW/cm² at the operation temperature between 170°C and 220°C.

However, when a solid electrolyte as an organic film is used, the operation temperature is generally 100°C or less. If the operation temperature is 200°C or more, the heat resistance of the organic film is not sufficient. The cesium dihydrogen phosphate is known as a solid electrolyte that can be used at 200°C or higher. However, since the use limit temperature of the cesium dihydrogen phosphate is 270°C, there is a demand for a new proton conductor that can be used at even higher temperature.

In response to such a demand, Non-Patent Document 1 discloses Li_{13.9}Sr_{0.1}Zn (GeO₄)₄ where a portion of Li of Li₁₄Zn (GeO₄)₄, which is a kind of LISICON as a solid electrolyte, is substituted with Sr. Li_{13.9}Sr_{0.1}Zn (GeO₄)₄ demonstrates electric conductivity of 0.039 S/cm at 600°C, and has electric conductivity higher than a solid electrolyte of conventional zirconia-based or ceria-based materials. Further, the fuel cell to which Li_{13.9}Sr_{0.1}Zn (GeO₄)₄ is applied has an output of about 0.4 W/cm² at the operation temperature of 600°C. Further, if movable lithium ions are completely substituted with protons in Li_{13.9}Sr_{0.1}Zn (GeO₄)₄, the electric conductivity at the operation temperature of 600°C improves to 0.048 S/cm. The lithium ions are exchanged with the protons in water or dilute acetic acid. As an example, the lithium ions are exchanged by stirring Li_{13.9}Sr_{0.1}Zn (GeO₄)₄ in an acetic aqueous solution of 5mM for 24 hours.

Non-Patent Document 2 discloses a proton conductor where an ion exchange treatment is applied to Li₁₄₋₂ₓZn₁₊ₓ(GeO₄)₄ in an acetic aqueous solution of 5mM to exchange lithium ions with protons. Non-Patent Document 2 applies the ion exchange treatment to Li₁₄Zn (GeO₄)₄, Li₁₂Zn₂ (GeO₄)₄, and Li₁₀Zn₃ (GeO₄)₄ with a varied Li⁺/Zn²⁺ ratio, identifies each sample, and measures the weight change during a rise in temperature, thereby confirming that the more lithium is contained in a sample, the greater an amount of the lithium ions exchanged with the protons. Further, Non-Patent Document 2 finds the possibility of obtaining the same electric conductivity as the proton conductor disclosed in Non-Patent Document 1 from the result of the electromotive force measurement of a hydrogen concentration cell using a proton conductor.

### PRIOR ART DOCUMENT(S)

### PATENT DOCUMENT(S)

Patent Document 1: JP2005-166486A
Non-Patent Document 1: Chem. Mater., 2017, 29, 1490-1495
Non-Patent Document 2: The Electrochemical Society of Japan, 2018 Autumn Meeting Proceedings, 1B02

### SUMMARY OF THE INVENTION

### TASK TO BE ACCOMPLISHED BY THE INVENTION

However, in the temperature range between 200°C and 600°C, a new proton conductor with higher electric conductivity is desired.

Thus, one object of the present invention is to provide a proton conductor that is suitable for the use in a temperature range between 200°C and 600°C. Further, another object of the present invention is to provide a manufacturing method of a proton conductor that is suitable for the use in a temperature range between 200°C and 600°C.

### MEANS TO ACCOMPLISH THE TASK

To achieve such an object, one aspect of the present invention provides a proton conductor having electric conductivity of 0.01 S/cm or more at 300°C, wherein a portion of lithium ions of Li₁₄₋₂ₓZn₁₊ₓ(GeO₄)₄ is substituted with protons, wherein the x is a number equal to or more than 0. The x may contain decimals. Li₁₄₋₂ₓZn₁₊ₓ(GeO₄)₄ can also be represented by Li_{2+2y}Zn_{1-y}GeO₄. Regarding these formulae, "x = 3-4y" is satisfied. A structure where a portion of the lithium ions of Li₁₄₋₂ₓZn₁₊ₓ(GeO₄)₄ is substituted with the protons can be expressed as (Li, H)₁₄₋₂ₓZn₁₊ₓ(GeO₄)₄ or (Li, H)_{2+2y}Zn_{1-y}GeO₄. In the above aspect, preferably, the x is 0.

According to this aspect, a proton conductor that can be used in the temperature range between 200°C and 600°C can be provided.

In the above aspect, preferably, 40% to 70% inclusive of movable lithium ions contained in Li₁₄₋₂ₓZn₁₊ₓ(GeO₄)₄ are substituted with the protons. Further, preferably, 50% to 60% inclusive of movable lithium ions contained in Li₁₄₋₂ₓZn₁₊ₓ(GeO₄)₄ are substituted with the protons. The movable lithium ions are lithium ions that are included in all the lithium ions in Li₁₄₋₂ₓZn₁₊ₓ(GeO₄)₄ and can move in Li₁₄₋₂ₓZn₁₊ₓ(GeO₄)₄. The ratio of the movable lithium ions to all the lithium ions in Li₁₄₋₂ₓZn₁₊ₓ(GeO₄)₄ is (3-x) to (14-2x).

Another aspect of the present invention is a manufacturing method of a proton conductor, comprising a process of substituting a portion of lithium ions with protons by immersing Li₁₄₋₂ₓZn₁₊ₓ(GeO₄)₄ in a non-aqueous organic solvent containing acid, wherein the x is a number equal to or more than 0. The x may contain decimals. In the above aspect, preferably, the x is 0.

According to this aspect, it is possible to manufacture a proton conductor that can be used in the temperature range between 200°C and 600°C. By immersing Li_{14- 2x}Zn₁₊ₓ(GeO₄)₄ in a non-aqueous organic solvent containing acid, the ion exchange rate of the movable lithium ions contained in Li₁₄₋₂ₓZn₁₊ₓ(GeO₄)₄ to the protons can be between 40% and 70% inclusive. In a case where the ion exchange rate of the movable lithium ions to the protons is between 40% and 70% inclusive, the structural stability of the proton conductor is improved and the electric conductivity becomes relatively high.

In the above aspect, preferably, the acid contains at least one selected from a group including benzoic acid, m-nitrophenol, acetic acid, p-toluenesulfonic acid, oxalic acid, and methanesulfonic acid. Further, preferably, the non-aqueous solvent contains at least one selected from a group including toluene, dimethylsulfoxide, tetrahydrofuran, and N, N-dimethylformamide.

### EFFECT OF THE INVENTION

According to the above aspects, it is possible to provide a proton conductor that is suitable for the use in a temperature range between 200°C and 600°C. Further, it is possible to provide a manufacturing method of a proton conductor that is suitable for the use in a temperature range between 200°C and 600°C.

### BRIEF DESCRIPTION OF THE DRAWINGS

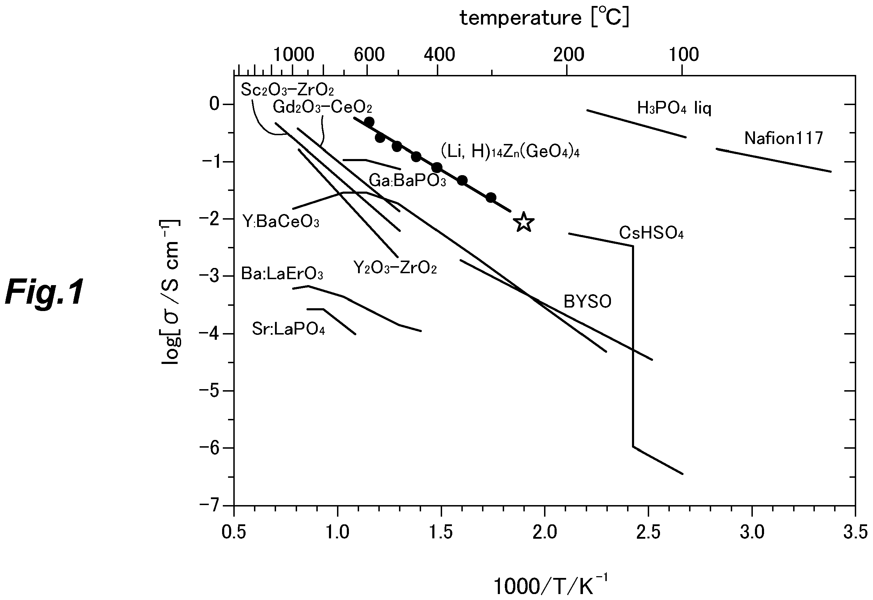

Figure 1 is a graph showing electric conductivity of solid electrolytes.

### MODE(S) FOR CARRYING OUT THE INVENTION

In the following, an embodiment of a proton conductor according to the present invention will be described. The proton conductor has a structure in which a portion of Li of Li₁₄₋₂ₓZn₁₊ₓ(GeO₄)₄ is substituted with protons. In the above formula, "x" is a number equal to or more than 0, and may include decimals. Li₁₄₋₂ₓZn₁₊ₓ(GeO₄)₄ can be represented by Li_{2+2y}Zn_{1-y}GeO₄. Regarding these formulae, "x = 3-4y" is satisfied. A structure where a portion of the lithium ions of Li₁₄₋₂ₓZn₁₊ₓ(GeO₄)₄ is substituted with the protons can be expressed as (Li, H)₁₄₋₂ₓZn₁₊ₓ(GeO₄)₄ or (Li, H)_{2+2y}Zn_{1-y}GeO₄. Li_{14- 2x}Zn₁₊ₓ(GeO₄)₄ is a kind of a lithium super ionic conductor (LISICON) that is a solid electrolyte. The "x" may be 0, 1, or 2, for example.

LISICON has a framework structure formed by tetrahedrons of LiO₄, GeO₄, SiO₄, PO₄, ZnO₄, and VO₄ of γ-Li₃PO₄ type and octahedrons of LiOe. Li₁₄Zn(GeO₄)₄ is a solid solution where Zn is dissolved in Li₄GeO₄ as a matrix, and has high conductivity.

The proton conductor has electric conductivity of 0.01 S/cm or more at 300°C. In the proton conductor, 40% to 70% inclusive of movable lithium ions contained in Li₁₄₋₂ₓZn₁₊ₓ(GeO₄)₄ are substituted with the protons. Moreover, in the proton conductor, 50% to 60% inclusive of the movable lithium ions contained in Li₁₄₋₂ₓZn₁₊ₓ(GeO₄)₄ may be substituted with the protons.

In the following, a manufacturing method of the proton conductor will be described. First, a preparing method of Li₁₄₋₂ₓZn₁₊ₓ(GeO₄)₄ before ion exchange will be described. A preparing method of Li₁₄₋₂ₓZn₁₊ₓ(GeO₄)₄ is also disclosed in Non-Patent Document 2 described above. Li₁₄₋₂ₓZn₁₊ₓ(GeO₄)₄ can be prepared by a solid phase method. Reagent powders of "Li source", "Zn source", and "Ge source" are mixed overnight in an organic solvent, and then pulverized. Thereafter, the organic solvent is evaporated to acquire a mixture. The Li source may contain at least one selected from a group including LiOH, Li₂O, and LiNO₃. The Zn source may contain at least one selected from a group including Zn(OH)₂, ZnCO₃, and Zn(NO₃)₂. The Ge source may contain at least one selected from a group including GeO and GeCl₂. The combination of the Li source, the Zn source, and the Ge source may be, for example, Li₂CO₃, ZnO, and GeO₂. The organic solvent may be at least one selected from a group including ethanol, methanol, 1-propanol, 2-propanol, and 1-butanol. Thereafter, the mixture is molded into pellets using a molding machine, and the molded articles are fired in air. Thereafter, the molded articles are pulverized into a powder to acquire Li_{14- 2x}Zn₁₊ₓ(GeO₄)₄.

The firing temperature in air of the molded articles may be 1000°C to 1200°C, and preferably, 1 100°C to 1150°C. If the firing temperature is lower than 1000°C, a solid phase reaction may not proceed well. If the firing temperature is higher than 1200°C, the molded articles may be melted. The firing time of the molded articles may be 3 to 7 hours, and preferably, 4 to 6 hours. The molded articles may be fired in air, for example, at 1150°C for 5 hours.

Li₁₄₋₂ₓZn₁₊ₓ(GeO₄)₄ may be Li₁₄Zn(GeO₄)₄, Li₁₂Zn₂(GeO₄)₄, or Li₁₀Zn₃(GeO₄)₄, for example. The ratio of Li to Zn in Li₁₄₋₂ₓZn₁₊ₓ(GeO₄)₄ can be varied according to the ratio of the Li source, the Zn source, and the Ge source to be mixed.

Next, a method of substituting a portion of the lithium ions of Li_{14- 2x}Zn₁₊ₓ(GeO₄)₄ with the protons will be described. A portion of the movable lithium ions included in Li₁₄₋₂ₓZn₁₊ₓ(GeO₄)₄ is substituted with the protons by stirring a powder sample of Li₁₄₋₂ₓZn₁₊ₓ(GeO₄)₄ in a non-aqueous solvent containing an acid. The non-aqueous solvent may be a non-protic solvent. The non-aqueous solvent may contain one selected from a group including toluene, dimethylsulfoxide, tetrahydrofuran, and N, N-dimethylformamide. The acid may contain at least one selected from a group including benzoic acid, m-nitrophenol, acetic acid, p-toluenesulfonic acid, oxalic acid, and methanesulfonic acid. For example, toluene from which water is removed by using a dehydrating agent may be used as the non-aqueous solvent, and Li₁₄₋₂ₓZn₁₊ₓ(GeO₄)₄ may be stirred for 24 hours in 100 mL of a non-aqueous organic solution in which benzoic acid is dissolved at the concentration of 5 mM as a proton source, thereby performing ion exchange.

An ion exchange rate of the movable lithium ions contained in Li_{14- 2x}Zn₁₊ₓ(GeO₄)₄ to the protons can be adjusted by changing the concentration of Li_{14- 2x}Zn₁₊ₓ(GeO₄)₄ in the solvent and the species of the acid. If the solvent is aqueous and the species of the acid is acetic acid, it is confirmed that the ion exchange rate of the movable lithium ions contained in Li₁₄₋₂ₓZn₁₊ₓ(GeO₄)₄ to the protons reaches 100%.

The powder of the proton conductor after ion exchange can be acquired by removing the solvent. A drying temperature at this time may be between the boiling point of the used solvent and 300°C inclusive. If the drying temperature is lower than the boiling point, the solvent may remain. If the drying temperature is higher than 300°C, the protons in the sample may be desorbed. According to the above range, a powdery proton conductor can be acquired.

The powdery proton conductor prepared in this way can be formed into a thin membrane, and thereby used as an electrolyte membrane for a fuel cell, an electrolytic cell, a solid battery, or the like. In a direct fuel cell as a kind of a fuel cell, a substance different from hydrogen is supplied as fuel to a fuel electrode of the fuel cell, hydrogen is generated from the fuel at the fuel electrode by a hydrogen generation reaction, and the generated hydrogen is used for causing a hydrogen-oxygen fuel cell to operate. In most cases, the chemical energy of a hydrogen gas to be generated is higher than that of the fuel being used. Accordingly, the hydrogen generation reaction from the fuel is an endothermic reaction. On the other hand, in an opposite electrode where water is generated, a combustion reaction of hydrogen proceeds, which causes conversion to electrical and thermal energy. In the direct fuel cell, this thermal energy can be used for the endothermic reaction at the fuel electrode. Accordingly, it is possible to efficiently supply the energy required for generating hydrogen in a cell, and to greatly improve energy efficiency for power generation including a process of generating hydrogen.

For the reason described above, by using the proton conductor according to the present embodiment as an ion exchange membrane, it is possible to form a fuel cell that operates in a temperature range of 200°C or higher while using as fuel hydrogen, methylcyclohexane, ammonia, methanol, dimethyl ether, formic acid, or the like. The reaction temperature on the occasion of generating hydrogen from this kind of fuel is within a temperature range between 300°C and 500°C, and a hydrogen generation catalyst suitable for each kind of fuel is preferably used. The hydrogen generation catalyst may be a known catalyst, and may consist of an ammonia decomposition catalyst or a reforming catalyst of methanol, dimethyl ether, formic acid, or the like.

Cyclohexane, which is used as fuel in the direct fuel cell, is one of an organic chemical hydride compounds expected as a hydrogen energy carrier. An organic chemical hydride method is a method of "storing" and "transporting" hydrogen as an organic chemical hydride compound (hydrogenated organic compound) where hydrogen is incorporated into a molecular structure of a chemical by a chemical reaction. This method generates methylcyclohexane (MCH) in a hydrogen storage process by reacting a hydrogen gas with toluene in a hydrogenation reactor. Toluene is a chemical to be a liquid at normal temperature and normal pressure, and is a general-purpose chemical widely used, as a general-purpose solvent with low toxicity, in large quantities as a solvent for paint and the like. In the above hydrogenation process, hydrogen atoms are incorporated into a molecule of MCH. MCH, like toluene, is a liquid at normal temperature and normal pressure, and has been put into practical use by means of large-scale transportation of chemical products that uses existing chemical tankers. MCH is an industrial agent that is used for office supplies (for example, used for a solvent for correction ink) that can be used at home, and is a general-purpose chemical with low toxicity. This MCH can be transported on the sea in large amounts by large vessels such as chemical tankers.

For the use of power generation or chemical raw materials, MCH transported on the sea is unloaded onto large tanks in a coastal area, and then used. Also, land transportation by chemical lorries and rail freight has been put into practical use. Accordingly, MCH can be transported to hydrogen stations, regional hubs, remote islands, or the like in the same manner as existing kerosene and gasoline.

Then, hydrogen is generated by a dehydrogenation device from MCH transported to the site where hydrogen is used, and the generated hydrogen is supplied for the use of power generation or chemical raw materials. After the generation of hydrogen by a dehydrogenation reaction, MCH returns to toluene. This toluene is transported again to the site where hydrogen is generated, and is reused as a raw material for a hydrogenation reaction. In this way, toluene is used repeatedly. A document (see Journal of the Gas Turbine Society, Vol.49, No.2, Pages 1-6 (2021)) introduces the characteristics of the organic chemical hydride method and the process of completing the international hydrogen supply chain demonstration between Southeast Asia and Japan in 2020 and shifting the organic chemical hydride method to the commercialization stage.

The organic chemical hydride method is a method that has been advocated since the 1980s. However, it is difficult to industrially use the organic chemical hydride method since this method significantly shortens the life of a dehydrogenation catalyst that generates hydrogen from MCH into which hydrogen is incorporated. As such, the organic chemical hydride method is a method that has not been put into practical use. The key to technological development is the development of a new dehydrogenation catalyst that has sufficient performance such as catalyst life for industrial use. At present, the development of a platinum-loaded alumina catalyst with high performance has been completed. Further, technological improvements that contribute to the cost reduction in each process of the above scheme are being made. A hydrogen energy carrier system by the organic chemical hydride method is a system that can be put into practical use at an early stage since the demonstration of all the processes has been completed and the technology has been established only for this system.

On the other hand, Japan has been operated, as a national policy, a policy to promote the practical application and spread of hydrogen energy from the fourth Strategic Energy Plan after the Great East Japan Earthquake. Following the formulation of the hydrogen/fuel cell technology roadmap, the basic strategy for hydrogen has been approved by the Cabinet in 2017. The practical application of the above organic chemical hydride method as a hydrogen energy carrier that "stores" and "transports" hydrogen energy on a large scale is included in the basic strategy for hydrogen. The target price by 2030 for supplying hydrogen is set to ¥30/Nm³, and the target price by 2050 therefor is set to ¥20/Nm³. Accordingly, there is a demand for cost reduction through continuous development for technology improvements.

In this regard, ¥30/Nm³ as the target price by 2030 is planned to be achieved through technological improvements and the conversion of existing facilities. By contrast, it is recognized that further technological innovation is required to achieve ¥20/Nm³ as the target price by 2050. At the current stage, various improvements and developments are being planned with respect to MCH manufacturers, the increase in the size of tankers, the way to use MCH after transportation, or the like. The proton conductor according to the present invention, which can be used for a MCH direct fuel cell, is recognized as a technology that is expected to have a significant effect on cost reduction in power generation.

The dehydrogenation reaction of MCH is an endothermic reaction, similar to the dehydrogenation reaction of abovementioned other hydrogen generating raw materials. Heat equivalent to 30% of the energy possessed by hydrogen transported as MCH is required for the dehydrogenation reaction. Accordingly, if hydrogen is generated by the current dehydrogenation device and then used as power generation fuel for turbines and SOFCs, the heat generated by these high temperature power plants is used for the dehydrogenation reaction, which causes a problem of decreasing power generation efficiency. Further, if fossil fuel is used as a heat source, CO₂ is generated, which causes a problem of increasing LCA CO₂ on the use of hydrogen.

As described above, when MCH is used as fuel for a direct fuel cell, the heat generated at the electrode opposite to the fuel electrode can be used for the dehydrogenation reaction at the fuel electrode. Accordingly, the cost of the heat source can be reduced, and the problem of increasing LCA CO₂ can be solved. If purchased natural gas is used as a heat source and the cost for supplying hydrogen is set to ¥30/Nm³ for 2030, the cost of purchasing the natural gas required for the dehydrogenation heat source is ¥5/Nm³ or more. Accordingly, if the heat source is no longer required in a MCH direct fuel cell, the cost can be reduced for ¥5/Nm³ or more.

In a MCH direct fuel cell, it is necessary to cause a dehydrogenation reaction near the fuel electrode to generate hydrogen. A dehydrogenation catalyst is required at this stage, and a dehydrogenation catalyst used for the abovementioned current technology can be used. This catalyst is a platinum-loaded alumina catalyst wherein platinum as active metal is carried on a γ-alumina carrier as fine particles. This catalyst is characterized in that, as compared with a conventional platinum alumina catalyst, platinum particles whose size is extremely small is carried thereon.

Further, the proton conductor according to the present embodiment can be used as a proton exchange membrane of an electrolytic cell. Accordingly, it is possible to provide an electrolytic cell that operates in a medium temperature range between 200°C and 600°C. At present, a chlor-alkali electrolytic cell and a PEM electrolytic cell have been put into practical use. The chlor-alkali electrolytic cell operates at about 90°C. The PEM electrolytic cell includes two electrodes provided on two sides of a polymer electrolyte membrane for water electrolysis. Further, a solid oxide electrolytic cell (SOEC), which utilizes a cell of an SOFC fuel cell for high-temperature electrolysis, is being researched and developed. However, there is no prospect of development for an electrolytic cell that operates in a medium temperature range between 200°C and 600°C since there are no conductive materials with sufficient electrical conductivity in this temperature range. The proton conductor according to the present embodiment has high electric conductivity at a range between 200°C and 600°C. Accordingly, by using the proton conductor as an ion exchange membrane, it is possible to form various electrolytic cells that operate in a temperature range of 200°C or higher. In recent years, technological development for producing various substances by electrolysis reactions has been actively carried out. The proton conductor according to the present embodiment can raise the temperature of these electrolytic cells and improve efficiency. The proton conductor according to the present embodiment has a wide range of applications and a very large ripple effect.

In the following, the effects of the proton conductor according to the present embodiment will be described. Figure 1 is a graph showing electric conductivity of various solid electrolytes. A star in Figure 1 indicates the electric conductivity σ (0.008 S/cm) (log σ = -2.1) of cesium dihydrogen phosphate (CsH₂PO₄) at 250°C. The electric conductivity plotted with circles indicates the electric conductivity of the proton conductor ((Li, H)₁₄Zn(GeO₄)₄) according to the present embodiment. The electric conductivity of the proton conductor according to the present embodiment at 300°C is higher than that of cesium dihydrogen phosphate (CsH₂PO₄) at 250°C. Further, the electric conductivity of the proton conductor according to the present embodiment at 600°C is higher than those of various solid electrolytes used for SOFC.

Further, the electric conductivity of a Nafion^{™} ion exchange membrane (Nafion^{™} 117), which is an organic polymer ion exchange membrane used in fuel cells for automobiles, is shown in an upper right side of Figure 1. The electric conductivity of the proton conductor according to the present embodiment between 500°C and 600°C is equivalent to that of the Nafion^{™} ion exchange membrane at the operation temperature of about 90°C. PEFC using the Nafion^{™} ion exchange membrane consists of a fuel cell of about 100kW, and is small. SOFC is much larger than PEFC. When the proton conductor according to the present embodiment is used as the solid electrolyte, the operation temperature of the current SOFC can be lowered and the size thereof can be reduced.

The proton conductor according to the present embodiment has electric conductivity higher than that of cesium dihydrogen phosphate as a solid electrolyte that operates in the temperature range between 200°C and 250°C. Further, the proton conductor according to the present embodiment has high electric conductivity even in the temperature range between 300°C and 600°C. The proton conductor according to the present embodiment has electric conductivity equivalent to that of the Nafion^{™} ion exchange membrane used in the fuel cells for automobiles in a temperature range of 500°C or higher. Further, the proton conductor according to the present embodiment can be used at a high temperature of 600°C or higher, and the electric conductivity of the proton conductor according to the present embodiment at 600°C is equivalent to that of the solid electrolyte used for the existing SOFC. The proton conductor according to the present embodiment moves not oxide ions but the protons, thereby lowering the operation temperature thereof to about 600°C. Consequently, the proton conductor according to the present embodiment can provide a fuel cell that is more efficient and handier than the existing SOFC.

In a manufacturing method of the proton conductor according to the present embodiment, Li₁₄₋₂ₓZn₁₊ₓ(GeO₄)₄ is immersed and stirred in a non-aqueous organic solution containing acid, so that the ion exchange rate of the movable lithium ions contained in Li₁₄₋₂ₓZn₁₊ₓ(GeO₄)₄ to the protons can be between 40% and 70% inclusive. In a case where the ion exchange rate of the movable lithium ions to the protons is between 40% and 70% inclusive, the structural stability of the proton conductor is improved and the electric conductivity becomes relatively high. By contrast, in a case where Li₁₄₋₂ₓZn₁₊ₓ(GeO₄)₄ is dissolved in an acetic acid aqueous solution, it is confirmed that the ion exchange rate of the movable lithium ions to the protons contained in Li₁₄₋₂ₓZn₁₊ₓ(GeO₄)₄ becomes 100%. However, the proton conductor in this case has low structural stability, a by-product phase is generated when the powder is molded, and it is confirmed that electric conductivity is lowered accordingly. In a case where a non-aqueous solvent is used when the proton conductor is manufactured, the structural stability is improved and thus the electric conductivity is increased even though the ion exchange rate may be lowered as compared with a case where an aqueous solvent is used.

### [Examples]

### (Preparing Method of Li₁₄Zn(GeO₄)₄)

Lithium carbonate was used as the Li source, zinc oxide was used as the Zn source, and germanium oxide was used as the Ge source. Lithium carbonate, zinc oxide, and germanium oxide were added in a weight ratio of 25: 4: 21, and then slurry was formed as these sources were comminuted and mixed with ethanol and zirconia balls for 24 hours in a sealed container. The slurry was dried at 130°C to acquire a powder, and the acquired powder was molded into pellets by a press. These pellets were fired in air at 1150°C for 5 hours in an alumina crucible. Thereafter, the fired pellets were ground in a magnetic mortar for 2 hours, and the ground article was again molded into pellets. Then, the pellets were fired in air at 1150°C for 5 hours in an alumina crucible. The fired pellets were ground again in a magnet mortar for 2 hours, so that a powder of Li₁₄Zn(GeO₄)₄ before ion exchange was acquired.

### (Example 1)

Toluene from which water was removed by a dehydrating agent was used as a non-aqueous solvent, and benzoic acid was dissolved therein at a concentration of 5 mM as a proton source to form a non-aqueous organic solution. A powdery sample of 2.5 g of Li₁₄Zn(GeO₄)₄ before ion exchange was stirred in 100 ml of the non-aqueous organic solution for 24 hours to perform ion exchange. After ion exchange, filtration was performed and the powder was collected. The powder was washed with toluene, and then dried in a vacuum condition at 130°C overnight, so that an ion-exchanged powder of example 1 was acquired. The ion exchange rate of the movable lithium ions to the protons in the proton conductor according to the example 1 was 52%.

### (Comparative Example 1)

A powder of Li₁₄Zn(GeO₄)₄ before ion exchange was added to 5 mM of acetic acid aqueous solution having 40 times weight of the powder, and stirred at room temperature for 24 hours to perform ion exchange. After ion change, filtration and washing were performed, and then the filtered and washed article was dried in a vacuum dryer at 130°C. Accordingly, an ion exchanged article of comparative example 1 was acquired. The ion exchange rate of the movable lithium ions to the protons of the proton conductor according to the comparative example 1 was 100%.

### (Comparison between Example 1 and Comparative Example 1)

The electric conductivity of the ion exchangers of the example 1 and the comparative example 1 was measured. This measurement was performed in a 10% humidified nitrogen atmosphere by a DC four terminal method and an AC two terminal method by using an electrochemical evaluation device (ModuLab by Solartron Analytical). The measurement results thereof are shown in the following Table 1.

**[Table 1]**

| sample | temperature [°C] | 300 | 350 | 400 | 450 | 500 | 550 | 600 |
|---|---|---|---|---|---|---|---|---|
| example 1 | electric conductivity conductivity σ [S/cm] | 3.53 × 10⁻² | 6.10 × 10⁻² | 8.50 × 10⁻² | 1.22 × 10⁻¹ | 1.68 × 10⁻¹ | 2.24 × 10⁻¹ | 4.07 × 10⁻¹ |
| comparative example 1 | | - | - | 2.86 × 10⁻⁴ | 1.03 × 10⁻³ | 2.55 × 10⁻³ | 5.85 × 10⁻³ | 1.15 × 10⁻² |

As shown in Table 1, it was confirmed that the example 1 has higher electric conductivity than the comparative example 1.

### (Example 2)

Dimethyl sulfoxide was used as a non-aqueous solvent, and m-nitrophenol, acetic acid, benzoic acid, p-toluenesulfonic acid, oxalic acid, and methanesulfonic acid were used as proton sources. Ion exchange was performed by the same method as in the example 1, while changing the concentration in a range of 5 mM to 100 mM. After that, the amount of ion exchange was measured by thermogravimetric analysis of the powder of Li₁₄Zn(GeO₄)₄ where ion exchange was performed. Consequently, the ion exchange rate was 45% to 65% for each proton source.

### (Comparative Example 2)

Using only a non-aqueous solvent, the effect of performing ion exchange on a powder of Li₁₄Zn(GeO₄)₄ before ion exchange was confirmed. As the non-aqueous solvent, toluene, tetrahydrofuran, ethanol, N, N-dimethylformamide, dimethylsulfoxide, and propylene carbonate treated with a dehydrating agent are used. Ion exchange was performed in the same manner as in Comparative Example 1 without using a proton source. Thereafter, the amount of ion exchange was confirmed by thermogravimetric analysis of the powder of Li₁₄Zn(GeO₄)₄ on which ion exchange was performed. Consequently, it was confirmed that ion exchange hardly progressed.

### [Industrial Applicability]

The proton conductor of the present invention can be suitably used as an ion exchange membrane of various fuel cells and various electrolytic cells that operate in a medium temperature range between 200°C and 600°C, which have never existed before. More specifically, various fuels that can generate hydrogen in the medium temperature range are directly supplied to a fuel cell as fuel for the fuel cell, and hydrogen is generated by a catalytic reaction within the cell, so that electricity is generated in the fuel cell. At the same time, the reaction heat required for the reaction to generate hydrogen from the fuel can be generated by a fuel cell reaction, which eliminates the need for a heat source and contributes to the cost reduction of power generation by the fuel cell. Further, as to a fuel cell that supplies existing hydrogen fuel, it is possible to provide a fuel cell that can operate in a medium temperature range with higher efficiency than a fuel cell that operates at a low temperature. Further, the temperature can be lowered to a medium temperature range, which an SOFC fuel cell that operates at a high temperature has been aiming for. Furthermore, the proton conductor can be applied to electrolytic cells. Thus, the present invention provides a basic technology relating to a proton conductor used in fuel cells and electrolytic cells, and thus is an invention with extremely high industrial applicability.

Concrete embodiments of the present invention have been described in the foregoing, but the present invention should not be limited by the foregoing embodiments and various modifications and alterations are possible within the scope of the present invention.

## Claims

1. A proton conductor having electric conductivity of 0.01 S/cm or more at 300°C, wherein a portion of lithium ions of Li₁₄₋₂ₓZn₁₊ₓ(GeO₄)₄ is substituted with protons,
wherein the x is a number equal to or more than 0.

2. The proton conductor according to claim 1, wherein the x is 0.

3. The proton conductor according to claim 1 or 2, wherein 40% to 70% inclusive of movable lithium ions contained in Li₁₄₋₂ₓZn₁₊ₓ(GeO₄)₄ are substituted with the protons.

4. The proton conductor according to claim 1 or 2, wherein 50% to 60% inclusive of movable lithium ions contained in Li₁₄₋₂ₓZn₁₊ₓ(GeO₄)₄ are substituted with the protons.

5. The proton conductor according to claim 3 or 4, wherein a ratio of the movable lithium ions to all the lithium ions of Li₁₄₋₂ₓZn₁₊ₓ(GeO₄)₄ is (3-x) to (14-2x).

6. A manufacturing method of a proton conductor, comprising a process of substituting a portion of lithium ions with protons by immersing Li₁₄₋₂ₓZn₁₊ₓ(GeO₄)₄ in a non-aqueous solvent containing acid,
wherein the x is a number equal to or more than 0.

7. The manufacturing method of the proton conductor according to claim 6, wherein the x is 0.

8. The manufacturing method of the proton conductor according to claim 6 or 7, wherein the acid contains at least one selected from a group including benzoic acid, m-nitrophenol, acetic acid, p-toluenesulfonic acid, oxalic acid, and methanesulfonic acid.

9. The manufacturing method of the proton conductor according to any one of claims 6 to 8, wherein the non-aqueous solvent contains at least one selected from a group including toluene, dimethylsulfoxide, tetrahydrofuran, and N, N-dimethylformamide.
